# EUROPEAN PATENT APPLICATION

(11) **EP 2 838 041 A1**
(43) Date of publication of application: **18.02.2015**
(21) Application number: 14178756.4
(22) Date of filing: 28.07.2014
(51) Int. Cl.: G06F 17/50

(54) **Ramp structures in composite parts**

(30) Priority: 13.08.2013 US 201313965666
(71) Applicant: Siemens Product Lifecycle Management Software Inc., Plano, TX 75024-6612 (US)
(72) Inventor: Carrera, Julio Cesar, Newton, MA Massachusetts 02460 (US); Hu, Weifang, Shrewsbury, MA Massachusetts 01545 (US); Moran, Jonathon T., Framingham, MA Massachusetts 01701 (US)
(74) Representative: Maier, Daniel Oliver

(57) **Abstract**

Methods for generating ramp structures in composite part models and corresponding systems and computer-readable mediums. A method includes receiving (705) a model of a composite part (200, 400, 802), the model including a topological definition (500) for the composite part that has a plurality of defined constant-thickness areas (402). The method includes determining (710) ramp areas (804, 806) from the topological definition, and determining (715) adjacency relationships between constant-thickness areas and ramp areas. The method includes determining (720) ramp structure points (808), constant rails (810), and ramp rails (814, 902, 906) for the model. The method includes (725) a set of normal curves (812) connecting corresponding ramp structure points of on-surface geometries (502, 816, 902) and offset geometries (504, 818) of the model. The method includes producing (730) offset geometries corresponding to each ramp rail and generating (735) a ramp surface (602, 814) for each ramp area. The method includes storing (740) the model including the generated ramp surfaces.

## Description

### TECHNICAL FIELD

The present disclosure is directed, in general, to computer-aided design ("CAD"), visualization, and manufacturing systems, product lifecycle management ("PLM") systems, and similar systems, that manage data for products and other items (collectively, "Product Data Management" systems or PDM systems). Various embodiments are particularly related to CAD systems and processes for composite parts.

### BACKGROUND OF THE DISCLOSURE

PDM systems manage PLM and other data. Improved PDM and CAD systems are desirable.

### SUMMARY OF THE DISCLOSURE

Various disclosed embodiments include methods for generating ramp structures in composite part models and corresponding systems and computer-readable mediums. A method includes receiving a model of a composite part, the model including a topological definition for the composite part that has a plurality of defined constant-thickness areas. The method includes determining ramp areas from the topological definition, and determining adjacency relationships between constant-thickness areas and ramp areas. The method includes determining ramp structure points, constant rails, and ramp rails for the model. The method includes creating a set of normal curves connecting corresponding ramp structure points of on-surface geometries and offset geometries of the model, and with length equal to the offset distance at those points, the normal curves being normal to a layup surface of the model. The method includes producing offset geometries corresponding to each ramp rail and generating a ramp surface for each ramp area. The method includes storing the model including the generated ramp surfaces.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
Figure 1 depicts a block diagram of a data processing system in which an embodiment can be implemented;
Figure 2 illustrates an example of a model of a composite part in accordance with disclosed embodiments;
Figure 3 illustrates an example of a portion of a logical representation of a part in accordance with disclosed embodiments;
Figures 4A-4C illustrate examples of aspects of a model of a composite part in accordance with disclosed embodiments;
Figures 5 and 6 illustrate examples of a topological definition for a composite part model in accordance with disclosed embodiments;
Figure 7 illustrates a flowchart of a process in accordance with disclosed embodiments;
Figures 8A-8C illustrate an example of a model with generated curves and ramps in accordance with disclosed embodiments; and
Figures 9A-9C illustrate examples of ramp rail geometries created in accordance with disclosed embodiments.

### DETAILED DESCRIPTION

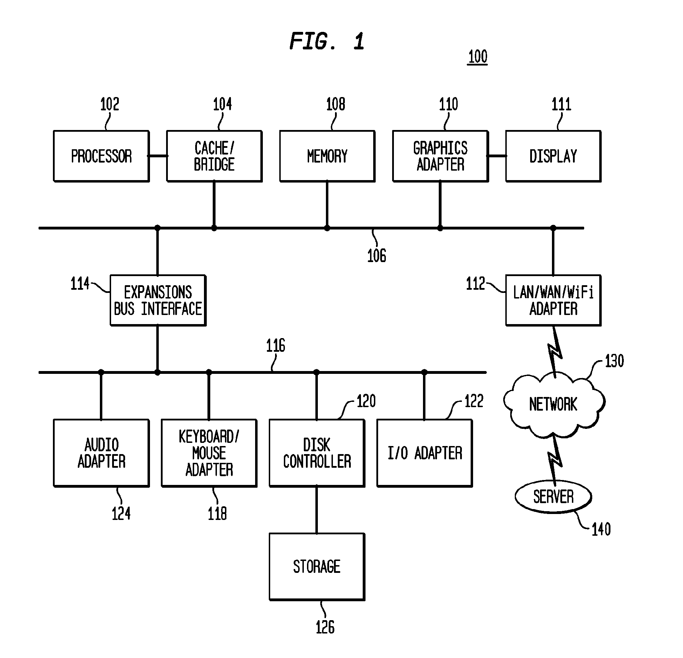

FIGURES 1 through 9C, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

Disclosed embodiments include systems and methods for creating accurate, updateable ramp geometry in transition areas of laminated composite parts. A composite part, as used herein, can be modeled as a set of areas of constant thickness, drop-off driven transitions between areas, and transition corner-treatment vertices. It should be noted that in composite parts a constant thickness area is not necessarily constant in thickness but can vary slightly due to manufacturing processes. Generating accurate solids from a composite design definition is a significant challenge. The process involves computing regions of constant thickness, creating offset surfaces for these regions and then creating ramps joining the different thickness constant regions. This final assemblage of surfaces can then be sewn together to form a solid.

Disclosed embodiments can generate the ramps from the composite definition such that their generation can be fully automated, and can parametrically define the ramp geometry such that it will generate accurately without gaps. The system can update with geometric changes without requiring the composite definition to be recomputed.

Figure 1 depicts a block diagram of a data processing system in which an embodiment can be implemented, for example as a PDM system particularly configured by software or otherwise to perform the processes as described herein, and in particular as each one of a plurality of interconnected and communicating systems as described herein. The data processing system depicted includes a processor 102 connected to a level two cache/bridge 104, which is connected in turn to a local system bus 106. Local system bus 106 may be, for example, a peripheral component interconnect (PCI) architecture bus. Also connected to local system bus in the depicted example are a main memory 108 and a graphics adapter 110. The graphics adapter 110 may be connected to display 111.

Other peripherals, such as local area network (LAN) / Wide Area Network / Wireless (e.g. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, etc.

Those of ordinary skill in the art will appreciate that the hardware depicted in Figure 1 may vary for particular implementations. For example, other peripheral devices, such as an optical disk drive and the like, also may be used in addition or in place of the hardware depicted. The depicted example is provided for the purpose of explanation only and is not meant to imply architectural limitations with respect to the present disclosure.

A data processing system in accordance with an embodiment of the present disclosure includes an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows™, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

As described above, a composite part can be defined and modeled as a set of areas of constant thickness, drop-off driven transitions between areas, and transition corner-treatment vertices. A set of material specifications linked to each area can implicitly or explicitly define layers of composite material partially covering the composite part. The layer shapes defined by sets of layers covering the same set of connected areas define the constant thickness areas of the composite part. The layers in a given layer shape drop-off gradually from the thicker to the thinner constant thickness areas that surround it. The rate at which the layers drop-off define the slope of the "ramp" areas of the composite part. The rate may be linear, piece-wise linear or non-linear.

The manual creation of a solid from a composite definition is a very tedious process, and ensuring that the result is correct is very difficult. The ramp generation involves creation of a very large amount of supporting geometry and many manual steps. Manually creating the ramp geometry such that it updates with geometry changes requires manually designing each structure in the composite part model.

Disclosed embodiments provide a robust construction of the ramps that is capable of updating with changes in the underlying geometry without requiring a complete recalculation of the composite definition, saving the user a substantial amount of effort for small engineering changes.

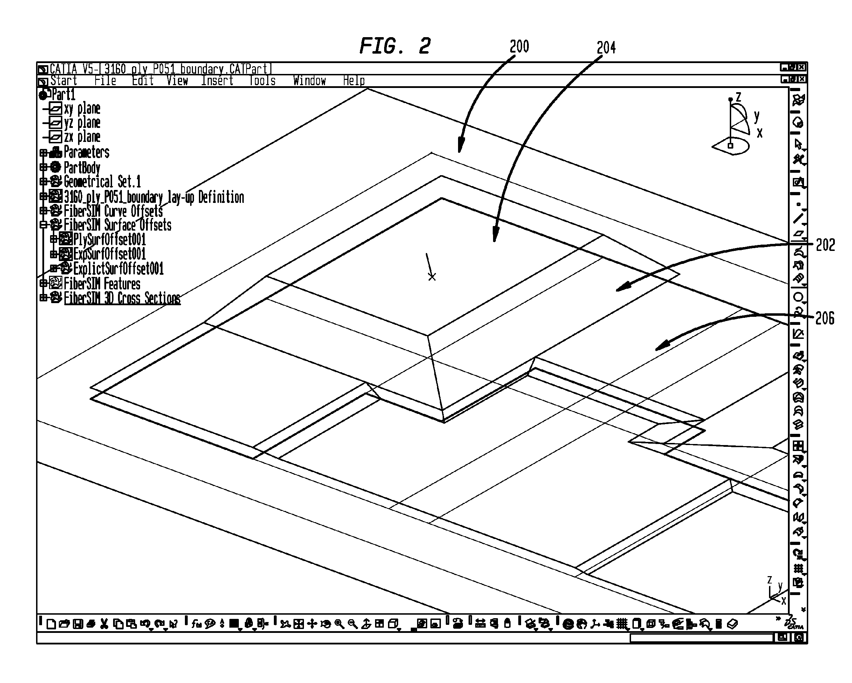

Figure 2 illustrates an example of a model of a composite part and the ramp 202 where thicker constant-thickness area 204 drops off to thinner constant-thickness area 206.

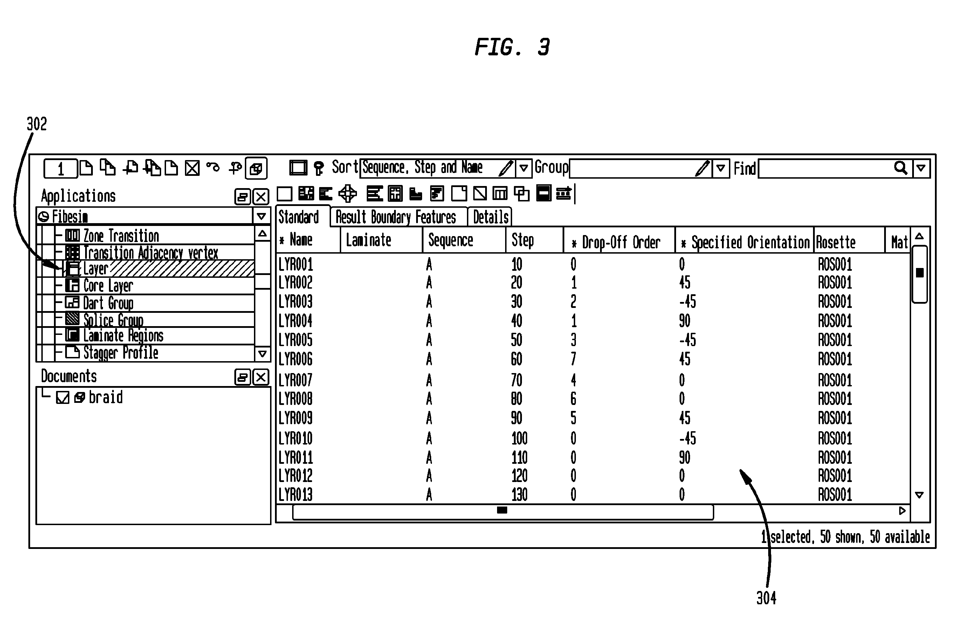

Figure 3 illustrates an example of a portion of a logical representation of a part, such as can be maintained and manipulated in a data processing system 100 as described herein. In this example, the layers are selected at 302 and the various layers are illustrated in window 304 with their respective sequences, steps, drop-off orders, and orientations.

This logical representation (or model) of the composite part is generally defined on the layup surface on which the layers of material are to be built up. Such a model can include the solid generated by offsetting the constant-thickness areas connected with exact ramp surface geometry. The logical representation of the composite part, together with the layup surface and area boundaries, is used to define the ramp construction geometry. The ramp construction geometry in turn drives the creation of the ramp surface geometry. The model combines the on-surface geometry (on the layup surface) with the material thickness of the layers into a topological definition of the constant-thickness and ramp areas of the composite part. The term "model," as used herein, is intended to refer to a logical representation of a composite part, as described herein, including the various aspects and parts described herein and associated parametric features and attributes.

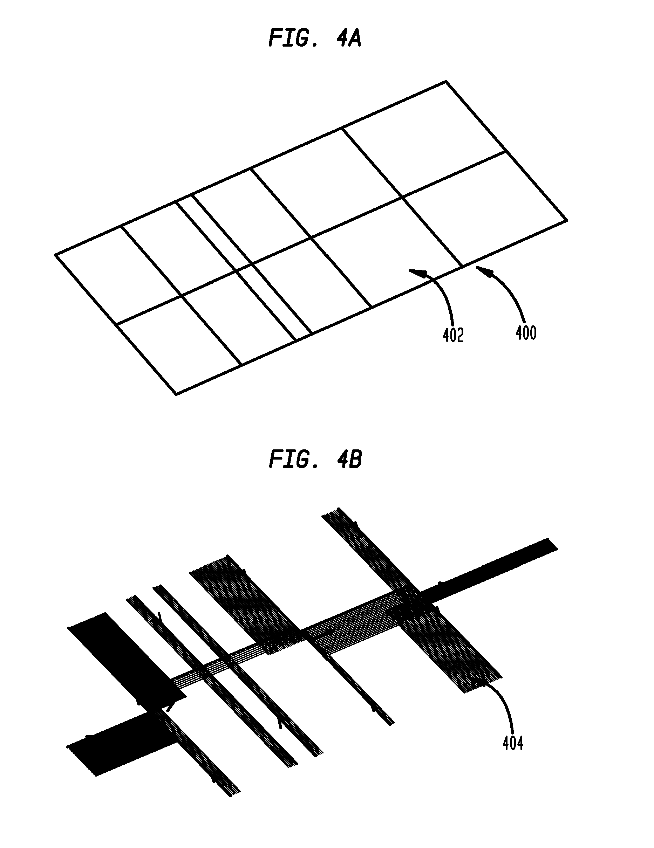

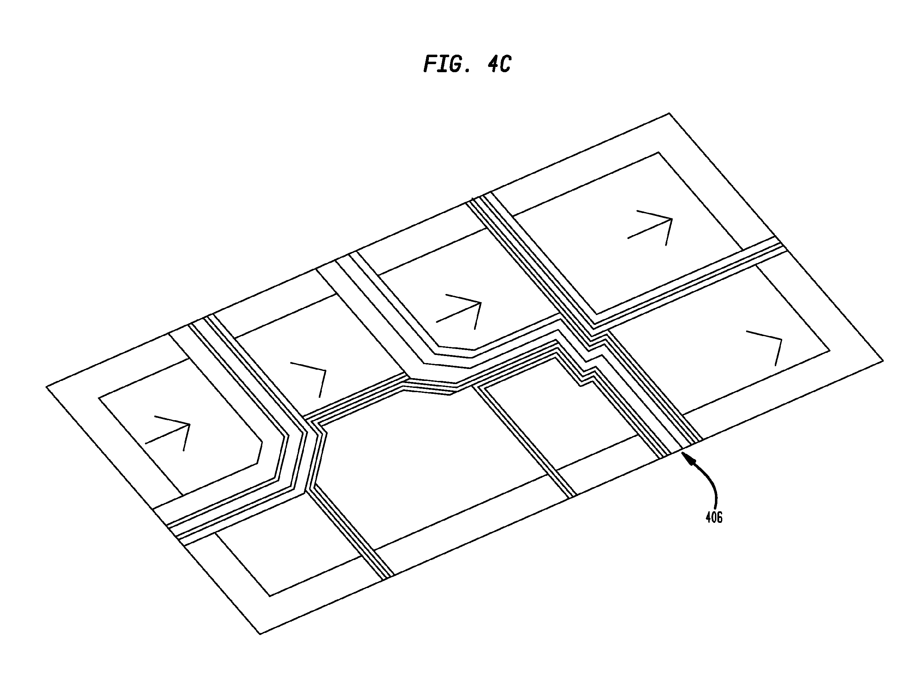

Figures 4A-4C illustrate examples of aspects of a model of a composite part 400. Figure 4A illustrates examples of constant thickness areas 402 of different thicknesses. Figure 4B illustrates examples of drop-off driven transitions 404 between constant-thickness areas as illustrated in Fig. 4A. Figure 4C illustrates corner-treated layers 406 corresponding to the drop-off driven transitions as illustrated in Fig. 4B.

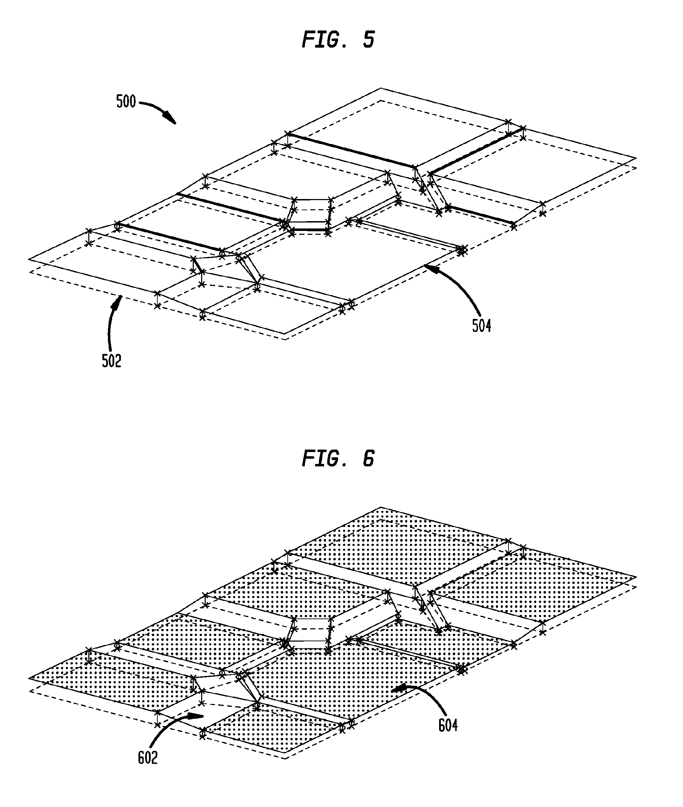

Figure 5 illustrates an example of a topological definition for a composite part model generally corresponding to the composite part 400 illustrated in Figs. 4A-4C. Fig. 5 illustrates the on-surface geometry 502 (illustrated by dashed lines) and the offset geometry 504 (illustrated by solid lines). The topological definition can be included in the model, and can define the constant-thickness areas, their geometries including dimensions, locations, geometric features such as faces, edges, and vertices, and any associated parameters. The features are preferably parametric.

A topological definition such as illustrated in Fig. 5 can be used to construct the ramp surfaces. The on-surface geometry can be used to drive the offset geometry. The offset distances can be computed as the sum of the material thicknesses of the layers in the various constant-thickness areas.

The ramp surfaces can be created using the offset geometry as input. Figure 6 illustrates an example of a topological definition for a composite part model generally corresponding to the composite part 400 illustrated in Figs. 4A-4C. In this example, ramp surfaces 602 are shown with contrasting shading to constant-thickness area surfaces 604.

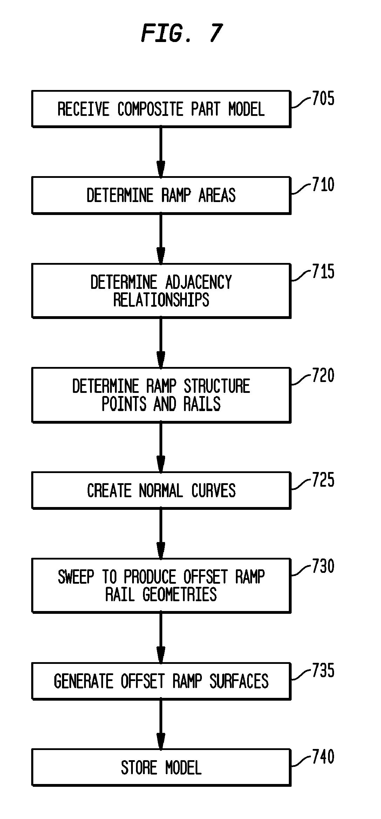

Figure 7 illustrates a flowchart of a process in accordance with disclosed embodiments, that can be performed by one or more PDM or CAD systems as described herein (generically referred to as the "system") to accurately generate ramps for a composite part. In the various processes described herein, the system can create parametric features that can then be used as input for the parametric features generated or manipulated by subsequent steps.

The system receives a model of a composite part that includes a topological definition for the composite part (705). "Receiving," as used herein, can include loading from storage, receiving from another device or process, receiving via an interaction with a user, or otherwise. The topological definition can include the layup surface geometry, the constant-thickness areas, their geometries including dimensions, locations, geometric features such as faces, edges, and vertices, and any associated parameters. Each constant area can be offset by the sum of the material thicknesses of the layers covered by the constant area.

The system determines ramp areas from the topological definition of the model (710). The system can determine ramp areas based on the transitions from thicker constant-thickness areas to thinner constant-thickness areas (relative to neighboring thicker areas). A transition can have different drop-off rates resulting in ramp areas that can have linear, piece-wise linear or non-linear slope.

The system determines the adjacency relationships between the constant-thickness and ramps areas of the model (715). The adjacency relationships can be, for example, between constant-thickness areas, between constant-thickness areas and ramp areas, or between ramp areas. The system can determine the adjacency relationships using the topological definition of the model.

The system determines ramp structure points and rails for the model based on the adjacency relationships (720). To determine the ramp structure points, the on-surface and the offset constant-area boundaries are split at each location where an adjacent ramp area starts or ends. A "rail" is defined as a position continuous curve that comprises the shared portion of two adjacent constant or ramp areas' boundaries (unless it is at the edge of the part), and starts and ends at a ramp structure point. A "constant rail" is a rail that is a portion of a constant area boundary curve, or a rail along the same thickness portion of two adjacent ramp areas' boundaries (where the top of one ramp area coincides with the bottom of another ramp area). Constant rails have constant thickness and have both on-surface and offset geometry. A "ramp rail" is any rail that is not a constant rail, and always lies between two adjacent ramp areas. Ramp rails also have on-surface and offset geometry but have variable thickness. The thickness of a ramp rail is defined at each end and is interpolated linearly. A ramp area has three or more sides, most commonly four, each comprised of one or more rails. If a side has multiple rails then they must touch and be tangent where they meet. At least two of the sides of a ramp area will be ramp rails.

The system can generate and maintain parametric constant rail geometry. The on-surface topological definition maintains the adjacency relationships between the constant areas and the ramp areas around them. The adjacency relationships are used to parametrically define the ramp surface geometry such that it is derived from the same constant and ramp rail geometry.

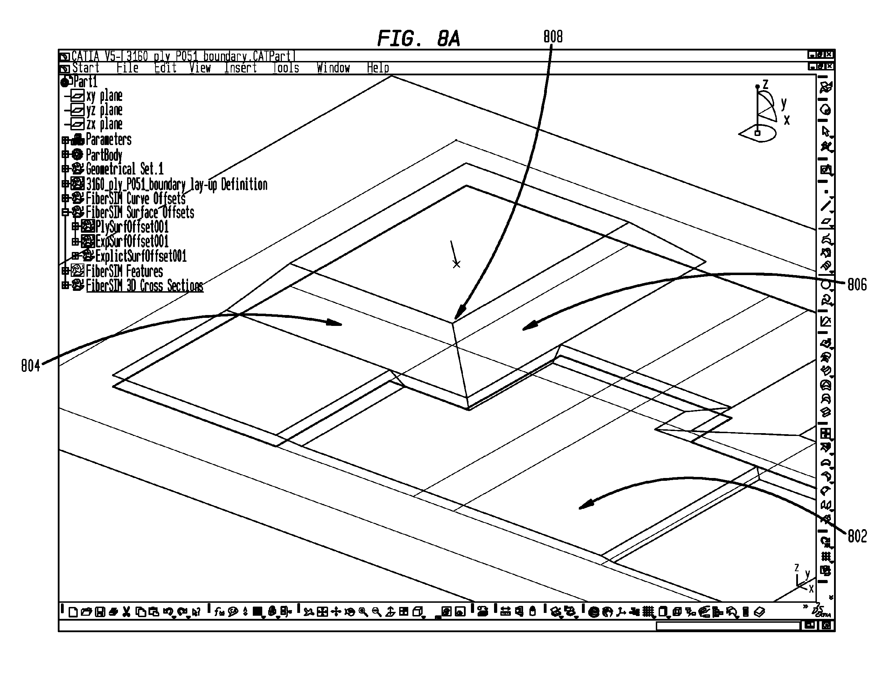

Figures 8A-8C illustrate an example of a model with generated curves and ramps. Fig. 8A illustrates an exemplary model 802 of a composite part. Model 802 includes ramp areas 804 and 806, which are adjacent to each other and have an adjacency relationship. Model 802 illustrates a ramp structure point 808.

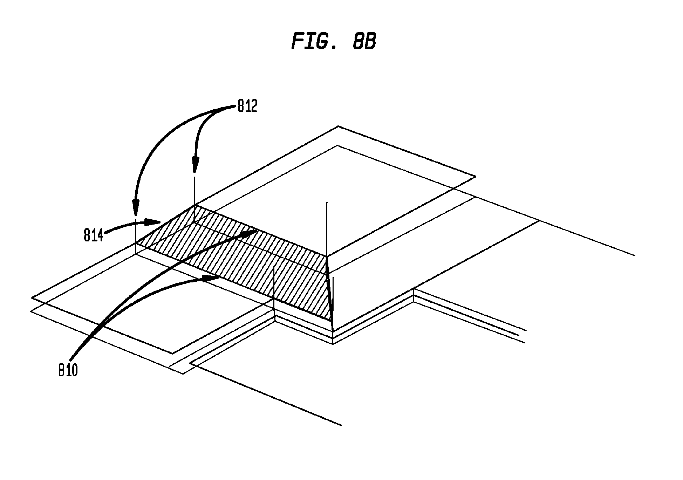

Fig. 8B illustrates the constant rails 810 that are defined by the boundary curves of the constant areas.

Returning to the process of Fig. 7, the system creates a set of normal curves which can connect corresponding ramp structure points of the on-surface and the offset constant area boundaries (725), or be defined as lines from on-surface ramp structure points, perpendicular to the surface, and with length equal to the offset distance at those points. These curves are normal to the layup surface of the model. The length of each of the normal curves corresponds to the thickness of the corresponding constant area.

Fig. 8B also illustrates the normal curves 812 that can be used to create the swept surfaces described below.

Returning to the process of Fig. 7, the system sweeps a surface for each ramp rail between the curves normal to the surface at each end to produce offset geometry for each ramp rail (730). The top of the surface swept in this manner becomes the ramp rail's offset geometry, so that the system produces offset geometries corresponding to each ramp rail.

Fig. 8B also illustrates an offset geometry ramp rail 814 that is defined by the top curve of the swept surfaces.

The system generates an offset ramp surface for each ramp area (735). If the ramp area has four sides, the surface is created by sweeping from one side to the opposite side along the remaining two sides. If the ramp area does not have four sides, an n-sided fill surface is created, whose boundary is defined by the constant and ramp rails for that ramp area.

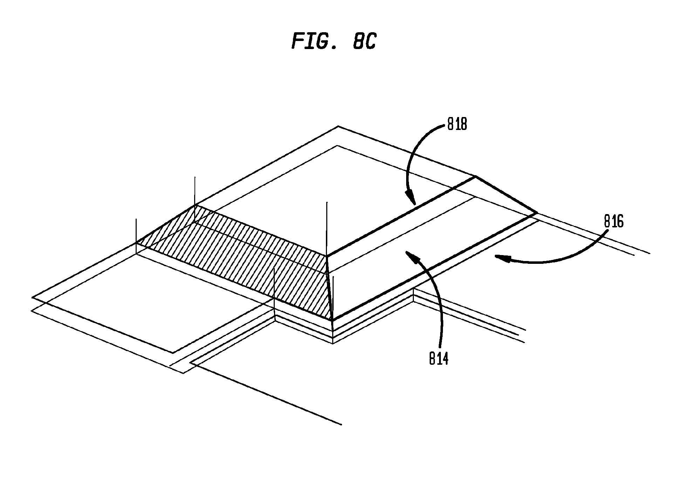

Fig. 8C illustrates a ramp surface 814 generated as described herein. The surface is parametric and corresponds to a ramp area. The ramp area definition may have such parameters as a bottom height, a top height, on-surface geometry 816, and offset geometry 818.

The system stores the model, including the generated ramps, curves, and additional geometry (740). Each of these elements is preferably fully parametric.

Processes as described herein, using the on-surface topological definition, allow the system to generate an accurate ramp shape reflecting the geometry of the layup surface geometry.

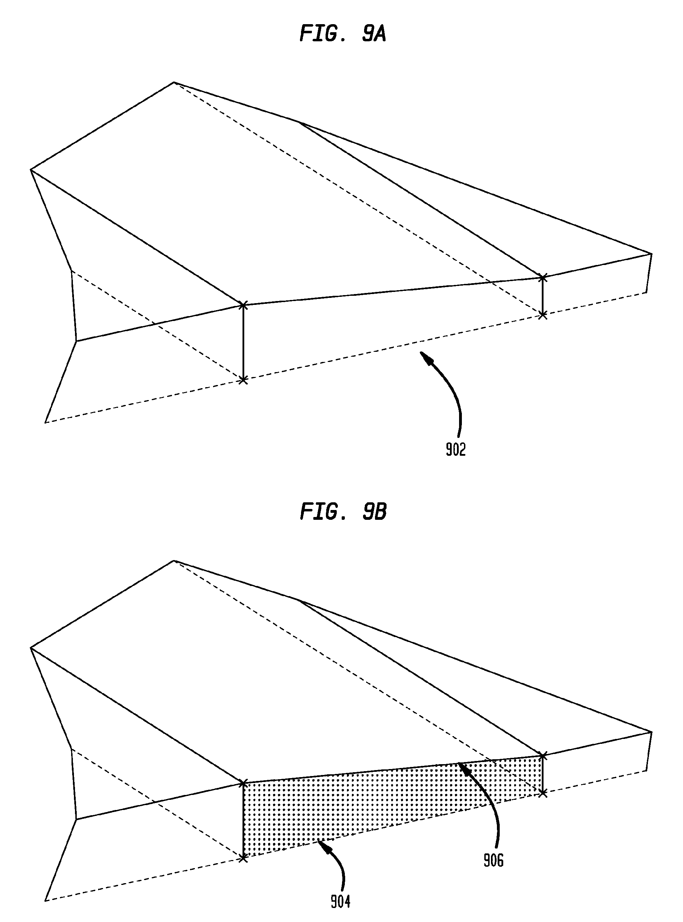

Figures 9A-9C illustrate examples of ramp rail geometries created in accordance with disclosed embodiments. Figure 9A illustrates an example of on-surface ramp rail geometry 902. The on-surface geometry 902 captures the layup surface curvature. In this example, the layup surface is flat; however, a complex curvature surface geometry will be similarly reflected in the on-surface ramp rail geometry.

Figure 9B illustrates an example of a surface 904 swept along the on-surface ramp rail geometry and the resulting offset ramp rail geometry 906.

In some cases, the system creates and maintains parametric interior ramp geometry. Interior ramp geometry can be used for the creation of accurate ramps that have G0 (position) and G1 (tangent) continuity.

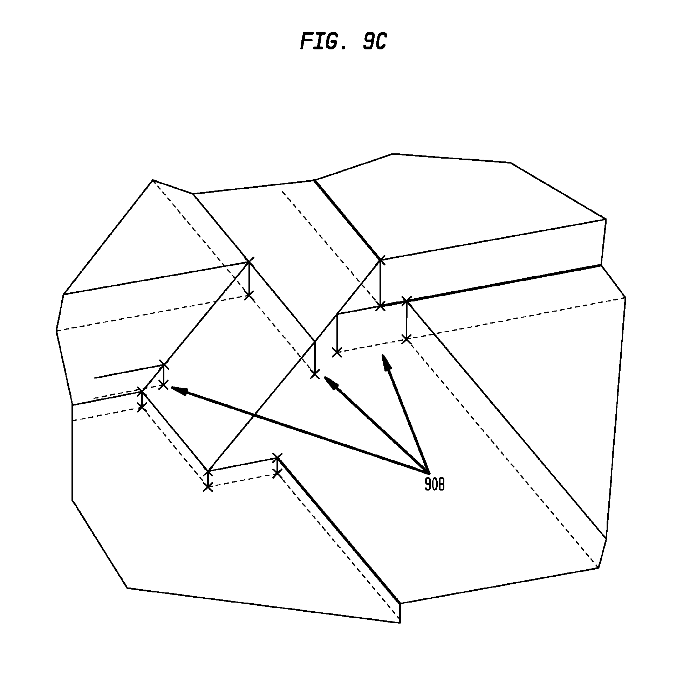

Fig. 9C illustrates the interior geometry 908 used to accurately construct a 4-way intersection of ramps. The interior ramps are also defined based on constant and ramp rails. The chain of constant rails between interior ramps will generally have one endpoint incident to a corner of a constant area. The constant area's thickness is the same as the thickness along the chain of constant rails. The thickness defines the length of the curve normal to the layup surface, which is then used to construct the incident ramp rails' offset geometry as described above.

Of course, those of skill in the art will recognize that, unless specifically indicated or required by the sequence of operations, certain steps in the processes described above may be omitted, performed concurrently or sequentially, or performed in a different order.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 100 may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

## Claims

1. A method for product data management, the method performed by at least one data processing system (100) and comprising:
receiving (705) a model of a composite part (200, 400, 802) by the data processing system, the model including a topological definition (500) for the composite part that has a plurality of defined constant-thickness areas (402);
determining (710) ramp areas (804, 806) from the topological definition, by the data processing system;
determining (715) adjacency relationships between constant-thickness areas and ramp areas, by the data processing system;
determining (720) ramp structure points (808), constant rails (810), and ramp rails (814, 902, 906) for the model, by the data processing system;
creating (725) a set of normal curves (812) connecting corresponding ramp structure points of on-surface geometries (502, 816, 902) and offset geometries (504, 818) of the model, and with length equal to the offset distance at those points, by the data processing system, the normal curves being normal to a layup surface of the model;
producing (730) offset geometries corresponding to each ramp rail;
generating (735) a ramp surface (602, 814) for each ramp area, by the data processing system; and
storing (740) the model, by the data processing system, including the generated ramp surfaces.

2. The method of claim 1, or the data processing system (100) of claim 8, or the computer-readable medium (126) of claim 9, wherein producing offset geometries corresponding to each ramp rail includes sweeping a surface for each rail between two normal curves.

3. The method of claim 1, or the data processing system (100) of claim 8, or the computer-readable medium (126) of claim 9, wherein the topological definition includes parametric on-surface geometry (502, 816, 902) and corresponding parametric offset geometry (504, 818).

4. The method of claim 1, or the data processing system (100) of claim 8, or the computer-readable medium (126) of claim 9, wherein each constant rail is a portion of a constant-thickness area boundary curve between consecutive ramp structure points or is a rail along a same-thickness portion of boundaries of adjacent ramp areas.

5. The method of claim 1, or the data processing system (100) of claim 8, or the computer-readable medium (126) of claim 9, wherein generating a ramp surface for each ramp area includes sweeping (730) from one side of a ramp area to an opposite side of the ramp area along two remaining sides.

6. The method of claim 1, or the data processing system (100) of claim 8, or the computer-readable medium (126) of claim 9, wherein the ramp surfaces are parametric surfaces corresponding to ramp areas with parameters including a bottom height, a top height, on-surface geometry, and offset geometry.

7. The method of claim 1, or the data processing system (100) of claim 8, or the computer-readable medium (126) of claim 9, wherein a length of each of the normal curves corresponds to a thickness of a corresponding constant rail (810).

8. A data processing system (100) comprising:
a processor (102); and
an accessible memory (108), the data processing system particularly configured to
receive (705) a model of a composite part (200, 400, 802), the model including a topological definition (500) for the composite part that has a plurality of defined constant-thickness areas (402);
determine (710) ramp areas (804, 806) from the topological definition; determine (715) adjacency relationships between constant-thickness areas and ramp areas;
determine (720) ramp structure points (808), constant rails (810), and ramp rails (814, 902, 906) for the model;
create (725) a set of normal curves (812) connecting corresponding ramp structure points of on-surface geometries (502, 816, 902) and offset geometries (504, 818) of the model, and with length equal to the offset distance at those points, the normal curves being normal to a layup surface of the model;
produce (730) offset geometries corresponding to each ramp rail; generate (735) a ramp surface (602, 814) for each ramp area; and store (740) the model including the generated ramp surfaces.

9. A non-transitory computer-readable medium (126) encoded with executable instructions that, when executed, cause one or more data processing systems (100) to:
receive (705) a model of a composite part (200, 400, 802), the model including a topological definition (500) for the composite part that has a plurality of defined constant-thickness areas (402);
determine (710) ramp areas (804, 806) from the topological definition;
determine (715) adjacency relationships between constant-thickness areas and ramp areas;
determine (720) ramp structure points (808), constant rails (810), and ramp rails (814, 902, 906) for the model;
create (725) a set of normal curves (812) connecting corresponding ramp structure points of on-surface geometries (502, 816, 902) and offset geometries (504, 818) of the model, and with length equal to the offset distance at those points, the normal curves being normal to a layup surface of the model;
produce (730) offset geometries corresponding to each ramp rail;
generate (735) a ramp surface (602, 814) for each ramp area; and
store (740) the model including the generated ramp surfaces.
